# EUROPEAN PATENT SPECIFICATION

(11) **EP 1 994 294 B1**
(45) Date of publication and mention of the grant of the patent: **05.05.2010**
(21) Application number: 06745238.3
(22) Date of filing: 20.03.2006
(51) Int. Cl.: F16C 33/78

(54) **ANNULAR SEALING ASSEMBLY, IN PARTICULAR FOR WHEEL HUBS**
RINGDICHTUNGSANORDNUNG, INSBESONDERE FÜR RADNABEN
ENSEMBLE D'ETANCHEITE ANNULAIRE, EN PARTICULIER POUR DES MOYEUX DE ROUE

(43) Date of publication of application: 26.11.2008
(73) Proprietor: Aktiebolaget SKF, 415 50 Göteborg (SE)
(72) Inventor: FOTI, Claudio, I-14010 Dusino San Michele (IT); SERAFINI, Andrea, I-10064 Pinerolo (IT); BRUNETTI, Marco, I-10142 Torino (IT)
(74) Representative: Plebani, Rinaldo
(86) International application number: PCT/IT2006/000171
(87) International publication number: WO 2007/108018

(56) References cited:
- EP-A2- 0 980 999
- EP-A2- 1 241 368
- US-A1- 2003 016 892
- US-A1- 2004 036 226

## Description

### TECHNICAL FIELD

The present invention relates to an annular seal assembly of the type intended to protect the rolling bearings of a wheel hub from external contaminants, such as water, dust, mud, with which the wheel hub is constantly in contact during the operative life.

In particular, the sealing assembly of the invention is suitable for advantageously equipping a hub bearing unit of a known type, whose hub and spindle functions are performed by the rings of a rolling bearing, which are appropriately flanged so as to receive on one side a wheel of a vehicle and on the other be fastened to the upright of a vehicle suspension.

### BACKGROUND ART

It is known that, in automotive applications, the rolling bearings, in particular those present in wheel hubs, and more in particular those forming the hub bearing unit of the aforesaid type, are continuously exposed, in use, to the contact with high quantities of contaminants: therefore, in such applications, the sealing assemblies used to protect the bearings (incorporated in the bearings themselves or, more frequently, belonging to the hub-bearing unit) in addition to the purpose of withholding the lubricant oil or grease within the bearing, above all have the purpose of preventing external contaminants from entering inside the wheel hub and/or the bearing.

Unfortunately, contaminants such as dust and mud, also if blocked by the sealing assembly, tend to blend with the grease lubricating the sealing lips and wear the latter off until they loose their entire sealing capacity. To overcome such drawback, the sealing assemblies known for the described applications present a main radial sealing lip and, more outwards, a dust lip for preserving the main lip from the contact with contaminants.

However, to avoid a rapid wear thereof, the anti-dust lips are usually designed so as to fit with the sealing surface on which the main lip cooperates by interference, with very low interference or even with minor clearance. In this way, however, the lubricant grease possibly placed between the two lips is easily lost outwards and the external contaminants, also if in minimum amount, may come into contact with the main sealing lip and cause consequent wear of the same.

A solution of the problem consists in shaping the anti-dust lip so as to "pump" the contaminants outwards. However, such solution is no longer satisfying in view of the longer life required by the members.

### DISCLOSURE OF INVENTION

It is the object of the present invention to provide a sealing assembly for demanding applications, for example vehicle wheel hubs, which is capable of ensuring, also in the presence of high doses of external contaminants and preserving, at the same time, a low production cost, a high sealing efficiency and, above all, which is capable of maintaining such high efficiency essentially unvaried also with the progressive wear of the sealing lip.

According to the invention, it is therefore provided a sealing assembly insertable between two relatively rotating members to fluid-tightly seal a compartment defined between said members from an external environment to the compartment itself, as defined in claim 1.

In particular, the sealing assembly comprises a first annular shield presenting an axial sleeve portion for the mounting angularly integral with one of said members, and a flange portion which radially extends from a first end of the sleeve portion; and a sealing member made of elastomeric material presenting an annular root portion which overhangingly and radially extends from a peripheral edge of the flange portion and a first axially sealing annular lip, as well as a second radially sealing annular lip, said lips overhangingly and axially extending on the opposite side of the first end of the sleeve portion, from a same side as a thinned end of the root portion and being reciprocally and divergingly arranged to form in radial section a V-shape having a vertex facing towards the root portion and an axis parallel to the sleeve portion.

The lips present respective V-shaped sealing edges and the first lip also presents a radial seat facing the opposite side of the second lip and accommodating a toroidal spring applying on the first lip an offset radial stress to an elastic hinge defined by the thinned end of the root portion and having centre of rotation arranged on a line crossing the sealing edge of the first lip and forming with a radial plane an angle γ in the range from 20° to 60°.

Furthermore, the sealing lips may be slidingly coupled with respective sealing surfaces of a second and third annular shields selectively arrangeable coaxial with the first shield and having similar dimensions, so that both the second and the third shield can be coupled to a same said first shield.

According to a feature of the invention, finally, the centre of application of said offset radial stress on the first lip is offset also with respect to said V-shaped sealing edge of the first lip, being arranged, with respect to the same, radially displaced closer to the sleeve portion of the first shield.

In this way, the external contaminants can reach the first lip, which forms the main sealing lip, only very difficultly and after a relative long working time because they are withheld by the second lip; furthermore, the wear of the latter does not have direct consequences on the sealing capacity of the sealing assembly entirely remitted to the first lip, also because the first lip, thanks to its particular geometry, is capable of maintaining a constant and unaltered sealing action also facing relatively high wear of the same.

In practice, the first lip of the sealing assembly of the invention makes, given some differences related to the specific application for which it is intended, a seal similar, according to the characteristics of the sealing edge, to that which can be obtained in sealing assemblies made according to the teachings of EP0980999, which, however, are intended for an entirely different application, i.e. for assembly between a diesel or petrol engine vehicle crankshaft and the crankcase and/or the oil sump, for withholding the oil, i.e. for application in a "clean" environment and at relative high speeds.

According to the invention, instead, a variant of such technology is now applied to a completely different field ("dirty" environment and relatively slow speeds).

### BRIEF DESCRIPTION OF THE DRAWINGS

Further features and advantages of the present invention will be apparent in the description of the following non-limitative embodiment thereof, with reference to the accompanying drawings, in which
- figure 1 shows an elevational view, in longitudinal radial section, of a first configuration of a sealing assembly made according to the invention;
- figure 2 shows an elevational view, in longitudinal radial section, of a second configuration of a sealing assembly made according to the invention; and
- figure 3 schematically shows a hub bearing unit provided with the sealing assemblies in figures 1 and 2.

### BEST MODE FOR CARRYING OUT THE INVENTION

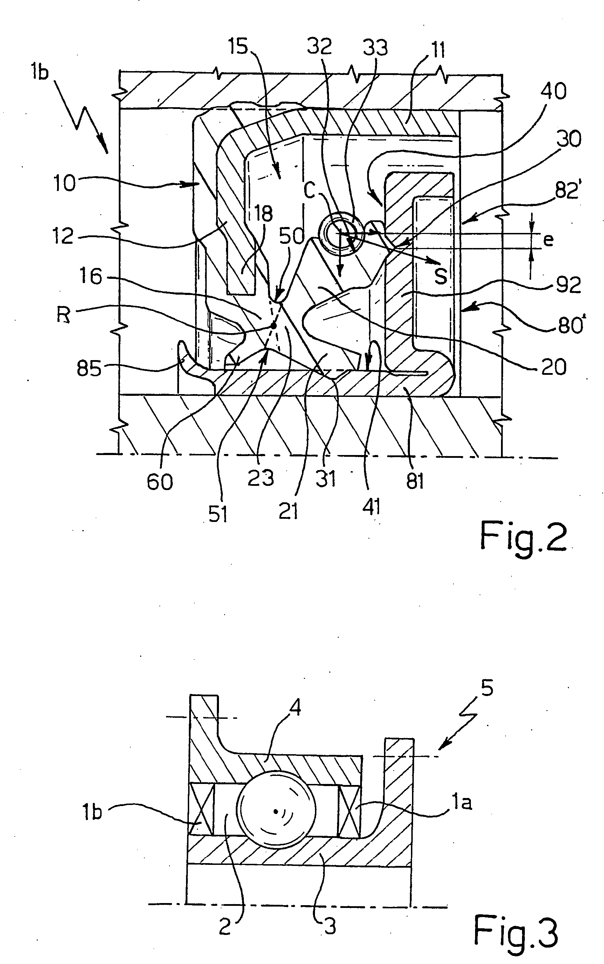

With reference to figures from 1 to 3, number 1 indicates a sealing assembly insertable in a compartment 2 defined between two relatively rotating members 3,4, in particular the inner 3 and outer 4 rings of a hub bearing unit 5 (figure 3) for vehicles, to isolate the compartment 2 from the outside environment.

The sealing assembly 1 comprises a first annular shield 10 presenting an axial sleeve portion 11 for angularly and integrally mounting with one of said members, in the case in point with the outer ring 4, and a flange portion 12 which radially extends from a first end 13 of the sleeve portion 11.

The sealing assembly 1 further comprises a sealing member 15 integrally carried by the shield 10 and made of elastomeric material (for example a natural or synthetic rubber) presenting an annular root portion 16 which radially and overhangingly protrudes from a peripheral edge 18 of the flange portion 10, a first axial sealing annular lip 20 and a second radial sealing axial lip 21.

Lips 20 and 21 axially and overhangingly extend on the opposite side of end 13 of the sleeve portion 11, from a same side as a thinned end 23 of the root portion 16 and are reciprocally and divergingly arranged to form in radial section a V-shape having a vertex facing towards the root portion 16 and an axis parallel to the sleeve portion 11.

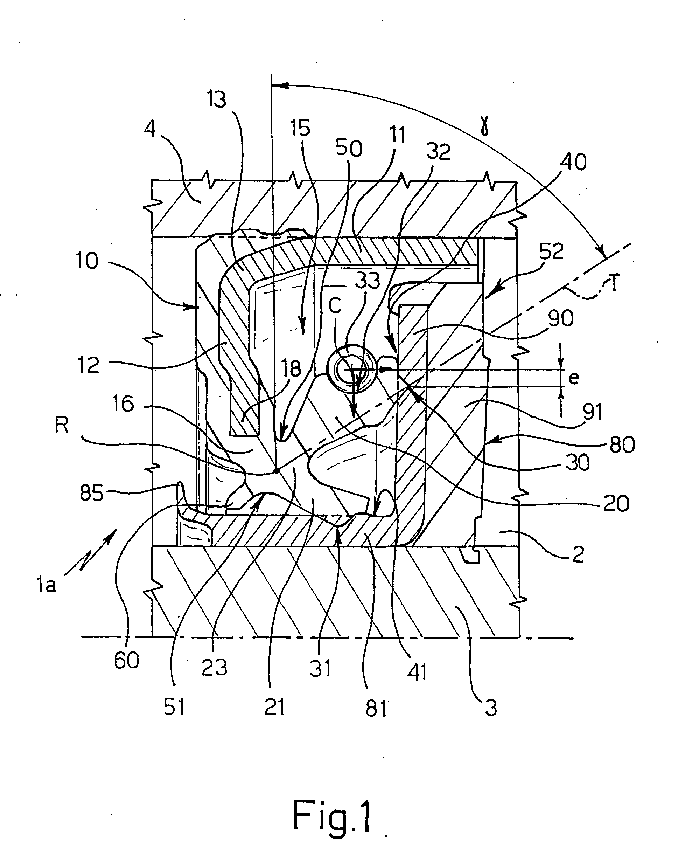

Each of the lips 20,21 presents respective V-shaped sealing edges 30,31 and lip 20 also presents a radial seat 32 facing the opposite side of lip 21 and accommodating a toroidal spring 33 mounted so as to apply on lip 20 a radial stress, indicated by the arrow in figures 1 and 2, offset to an elastic hinge defined by the thinned end 23 of the root portion 16 and having centre of rotation R arranged on a line T crossing the sealing edge 30 of lip 20 (indicated by a dash-dotted line in figure 1) and forming with a radial plane an angle γ in the range from 20° to 60°.

According to a feature of the invention, the sealing lips 20,21 are slidingly engageable, by means of V-shaped edges 30, 31, with respective sealing surfaces 40, 41 of either a second annular shield 80 (figure 1) or a third annular shield 80' (figure 2), both selectively, arrangeable coaxial with the shield 10 and having similar dimensions.

The centre of application, indicated by C in figures 1 and 2, of the mentioned offset radial stress applied by the spring, 33 on the lip 20 is, according to a further feature of the invention, offsetly arranged with an offset equal to "e", also with respect to the V-shaped sealing edge 30 of the lip 20, in the sense that it is arranged in a displaced position radially closer to the sleeve portion 11 of the first shield 10 with respect to the sealing edge 30. By effect of the doubly offset position of point C with respect both to point R and edge 30, the pure axial component of the stress applied by the spring 33 to the lip 20 does not cross the edge 30; consequently, an oblique resultant forming an angle with the sleeve portion 11 will cross the same in use.

The lips 20,21 are delimited towards the thinned end 23 of the annular root portion 16, and on the opposite side, by respective annular grooves 50,51 having semicircular profile in radial section, which equally delimit and define the thinned end 23; the centre of rotation R of the elastic hinge defined by such tapered end 23 of the annular root portion 16 is chosen so as to be found at the intersection of opposite lines tangent to the profile of the grooves 50,51, schematically indicated in figure 2 by broken lines.

The sealing member 15 further presents a third lip 60, shaped as an anti-dust lip, which extends in direction opposite to lip 20 and on the same side as lip 21, overhangingly from the root portion 16; the latter extending also overhangingly and obliquely with respect to the flange portion 12, from the edge 18, in the same direction as the second lip 21 so that, in radial direction, the root portion 16 and the lips 20, 21 and 60 essentially form an X-shape, having the centre of rotation R for the lip 20 essentially arranged in the middle of the X-shape.

With reference to figures 1 and 2, the first shield 10 may be coupled, according to an aspect of the invention, either with a second annular shield 80, forming a sealing assembly of configuration 1a (figure 1), or with a third annular shield 80' forming a sealing assembly of configuration 1b (figure 2).

Both shields 80 and 80' each present in radial section an essentially L-shape comprising a sleeve portion 81 for an assembly angularly integral with the other of said members, in the case in point the inner ring 3, and a flange portion 82,82', arranged in use facing and opposite the respective sleeve 11 and flange 12 portions of the first shield 10.

The lips 20 and 21, as it is schematically shown off-scale in figures 1 and 2 (in which lips 20,21 are shown in undeformed configuration), slidingly cooperate with a predetermined interference, respectively, with the flange portion 82,82' and the sleeve portion 81 of, selectively, either the second shield 80 or the third shield 80'.

In both cases, the sleeve portion 81 of the shield 80,80' presents on the opposite side of the respective flange portion 82,82', an edge 85 folded towards the flange portion 12 of the first shield 10, shaped so as to form in use a centrifuge element or flinger of contaminants possibly present in the environment outside the space 2 and dimensioned so as to shield the third anti-dust lip 60 towards said outer environment, so as to protect it.

The flange portion 82 of the second shield 80 includes, on the side opposite the first shield 10, an essentially flat metallic armature 90 carrying a magnetic elastomeric ring 91 defining a phonic wheel.

Conversely, the flange portion 82' of the third shield 80' is defined by a coined metallic armature 92 presenting a U-shaped fold at the sleeve portion 81 and a L-shaped fold at its peripheral edge, so as to present the same axial dimensions as the flange portion 82 of the second shield 80, so that the second and third shields can both either be coupled to the same first shield 10.

Thanks to the structure described in detail, by performing a mathematical and geometrical breakdown of the forces acting on lip 20 it is possible to demonstrate that the load S (figure 2) acting on the sealing edge 30 is oblique and essentially independent of the width of the area actually in contact between the edge 30 and the surface 40, both of minor axial variations of positions of the edge 30, whereby the sealing action is maintained essentially constant also with the progressive wear of the lip 20.

## Claims

1. A sealing assembly (1) insertable in a compartment (2) defined between two relatively rotating members (3,4), in particular the rings of a hub bearing unit (5) for vehicles, to isolate the compartment from the external environment, the sealing assembly comprising a first annular shield (10) presenting an axial sleeve portion (11) for angularly and integrally assembly to one (4) of said members, and a flange portion (12) which extends radially from a first end (13) of the sleeve portion (11); and a sealing member (15) made of elastomeric material presenting an annular root portion (16) which radially and overhangingly extends from a peripheral edge (18) of the flange portion (12) and a first and axial sealing annular lip (20); said sealing member (15) also presenting a second and radial sealing lip (21), said lips (20,21) axially and overhangingly extending on the opposite side of the first (13) end of the sleeve portion (11), from a same side as a thinned end (23) of the root portion (16) and being reciprocally and divergingly arranged so as to form a V-shape in radial section having a vertex facing the root portion; said lips (20,21) presenting respective V-shaped sealing edges (30,31) and the first lip (20) further presenting a radial seat (32) facing the opposite side of the second lip (21) and accommodating a toroidal spring (33) applying on the first lip (20) an offset radial stress to an elastic hinge defined by the thinned end (23) of the root portion (16) and having centre of rotation (R) arranged on a line (T) crossing the sealing edge (30) of the first lip (20) and forming with a radial plane an angle γ in the range from 20° to 60°; **characterised in that**, in combination : (i) - said V-shape defined in radial section by said first (20) and second (21) sealing lips has an axis parallel to the sleeve portion (11); and (ii) - both said first and second sealing lips (20,21) are designed to slidingly couple, by means of said V-shaped edges, with respect sealing surfaces (40,41) of either a second (80) or third (80') annular shields selectively arrangeable coaxial with the first shield (10) and having similar dimensions; (iii) - the centre of application of said offset radial stress on the first lip (20) being offset also respect to said V-shaped sealing edge (30) of the first lip (20).

2. A sealing assembly, (1) according to claim 1, **characterised in that** said centre of application of said offset radial stress on the first lip (20) is arranged, with respect to said V-shaped sealing edge (30) of the first lip (20), radially shifted closer to the sleeve portion (11) of the first shield (10).

3. A sealing assembly (1) according to claim 1 or 2, **characterised in that** said first and second annular lips (20,21) are defined, towards said thinned end (23) of the annular root portion (16) and on the opposite side, by respective angular grooves (50,51) having semicircular profile in radial section, the centre of rotation of said elastic hinge defined by said thinned end (23) of the annular root portion (16) being located at the intersection of opposite lines tangent to the profile of said grooves (50,51).

4. A sealing assembly (1) according to one of the preceding claims, **characterised in that** said sealing member (15) presents a third lip (60), shaped as an anti-dust lip, which extends in the opposite direction to said first lip (20) and on the same side as said second lip (21), overhangingly from said root portion (16) ; the latter obliquely extending with respect to said flange portion (12), in the same direction as the second lip (21) so that said root portion (16) and said first, second and third lips (20, 21, 60) essentially form, in radial section, an X-shape with said centre of rotation for the first lip (20) essentially arranged in the middle of the X-shape.

5. A sealing assembly (1) according to claim 4, **characterised in that** said second (80) and third (80') annular shields each present in radial section an essentially L-shape, comprising a sleeve portion (81) for the assembly angular integral with the other (3) of said members and a flange portion (82,82'), arranged in use facing and opposite said sleeve (11) and flange (12) portions of said first shield (10); said first and second lips (20,21) slidingly cooperating with predetermined interference, respectively, with the flange portion (82,82') and the sleeve portion (81) of, selectively, either the second (80) or third (80') shield.

6. A sealing assembly (1) according to claim 5, **characterised in that** said sleeve portion (81) of the second and third shields (8',80') presents, on the opposite side of the flange portion (82,82'), an edge (85) folded towards the flange portion (12) of the first shield (10), shaped so as to form in use a centrifuge element of possible contaminants present in the external environment and so as to shield said third lip (60) towards said external environment.

7. A sealing assembly (1) according to claim 5 or 6, **characterised in that** said flange portion (82) of the second shield (80) includes, on the opposite side of the first shield (10), an essentially flat metallic armature (90) carrying a ring (91) of magnetic elastomeric material defining a phonic wheel.

8. A sealing assembly (1) according to claim 7, **characterised in that** said flange portion (82') of the third shield (80') is defined by a coined metallic armature (92) presenting a U-shaped fold at the sleeve portion (81) and an L-shaped fold at its peripheral edge, so as to present the same axial dimensions as the flange portion (82) of the second shield (80), so that the second and third shields (80.80') may both either be coupled to a same said first shield (10).

9. Bearing unit (5), in particular for the hub of a motor vehicle wheel, comprising a sealing assembly (1) according to any of the preceding claims:

## Patentansprüche

1. Dichtungsanordnung (1), die in ein zwischen zwei sich relativ zueinander drehenden Elementen (3, 4), insbesondere den Ringen einer Nabenlagereinheit (5) für Fahrzeuge, definiertes Fach (2) eingeführt werden kann, um das Fach von der Außenumgebung zu isolieren, wobei die Dichtungsanordnung eine erste ringförmige Abschirmung (10), die einen axialen Hülsenabschnitt (11) für die winkelförmige und einstückige Montage an eines (4) der Elemente und einen Flanschabschnitt (12) aufweist, der sich radial von einem ersten Ende (13) des Hülsenabschnitts (11) erstreckt, und ein aus elastomerem Material hergestelltes Dichtungselement (15) umfasst, das einen ringförmigen Wurzelabschnitt (16), der sich radial und überhängend von einem Umfangsrand (18) des Flanschabschnitts (12) erstreckt, und eine erste und axiale Ringdichtungslippe (20) aufweist, wobei das Dichtungselement (15) weiterhin eine zweite und radiale Dichtungslippe (21) aufweist, wobei sich die Lippen (20, 21) axial und überhängend auf der gegenüberliegenden Seite des ersten (13) Endes des Hülsenabschnitts (11) von derselben Seite wie ein verdünntes Ende (23) des Wurzelabschnitts (16) erstrecken und so gegenseitig und divergierend angeordnet sind, dass sie im Radialschnitt V-förmig sind und einen dem Wurzelabschnitt zugewandten Scheitel haben, wobei die Lippen (20, 21) jeweilige V-förmige Dichtungsränder (30, 31) aufweisen und die erste Lippe (20) ferner einen radialen Sitz (32) aufweist, der der gegenüberliegenden Seite der zweiten Lippe (21) zugewandt ist und eine Ringfeder (33) aufnimmt, die an der ersten Lippe (20) eine versetzte radiale Belastung auf ein elastisches Scharnier ausübt, das vom verdünnten Ende (23) des Wurzelabschnitts (16) definiert wird und dessen Rotationsmitte (R) auf einer Linie (T) liegt, die den Dichtungsrand (30) der ersten Lippe (20) kreuzt und mit einer radialen Ebene einen Winkel γ im Bereich von 20° bis 60° bildet, **dadurch gekennzeichnet, dass** in Kombination (i) - die im Radialschnitt von der ersten (20) und der zweiten (21) Dichtungslippe definierte V-Form eine zum Hülsenabschnitt (11) parallel verlaufende Achse hat, und (ii) - sowohl die erste als auch die zweite Dichtungslippe (20, 21) so ausgelegt sind, dass sie mittels der V-förmigen Ränder gleitend mit jeweiligen Dichtungsflächen (40, 41) einer zweiten (80) oder dritten (80') ringförmigen Abschirmung gekoppelt werden können, die gezielt koaxial mit der ersten Abschirmung (10) angeordnet werden kann und ähnliche Abmessungen hat, und (iii) - die Mitte der Ausübung der versetzten radialen Belastung auf die erste Lippe (20) auch bezüglich des V-förmigen Dichtungsrands (30) der ersten Lippe (20) versetzt ist.

2. Dichtungsanordnung (1) nach Anspruch 1, **dadurch gekennzeichnet, dass** die Mitte der Ausübung der versetzten radialen Belastung auf die erste Lippe (20) bezüglich des V-förmigen Dichtungsrands (30) der ersten Lippe (20) radial näher am Hülsenabschnitt (11) der ersten Abschirmung (10) angeordnet ist.

3. Dichtungsanordnung (1) nach Anspruch 1 oder 2, **dadurch gekennzeichnet, dass** die erste und die zweite ringförmige Lippe (20, 21) zum verdünnten Ende (23) des ringförmigen Wurzelabschnitts (16) hin und auf der gegenüberliegenden Seite durch jeweilige ringförmige Nuten (50, 51) mit im Radialschnitt halbkreisförmigem Profil definiert werden, wobei die Rotationsmitte des vom verdünnten Ende (23) des ringförmigen Wurzelabschnitts (16) definierten elastischen Scharniers am Schnittpunkt gegenüberliegender Linien, die das Profil der Nuten (50, 51) tangieren, liegt.

4. Dichtungsanordnung (1) nach einem der vorhergehenden Ansprüche, **dadurch gekennzeichnet, dass** das Dichtungselement (15) eine dritte Lippe (60) aufweist, die als Staubschutzlippe ausgebildet ist und sich in der entgegengesetzten Richtung zur ersten Lippe (20) und auf derselben Seite wie die zweite Lippe (21) von dem Wurzelabschnitt (16) überhängend erstreckt, wobei sich Letzterer bezüglich des Flanschabschnitts (12) schräg in derselben Richtung wie die zweite Lippe (21) erstreckt, so dass der Wurzelabschnitt (16) und die erste, die zweite und die dritte Lippe (20, 21, 60) im Radialschnitt im Wesentlichen ein X bilden, wobei die Rotationsmitte für die erste Lippe (20) im Wesentlichen in der Mitte des X angeordnet ist.

5. Dichtungsanordnung (1) nach Anspruch 4, **dadurch gekennzeichnet, dass** die zweite (60) und die dritte (80') ringförmige Abschirmung im Radialschnitt jeweils im Wesentlichen L-förmig sind und einen Hülsenabschnitt (81) für die winkelförmige und einstückige Montage an das andere (3) der Elemente und einen Flanschabschnitt (82, 82') umfassen, der im Gebrauch dem Hülsen- (11) und dem Flanschabschnitt (12) der ersten Abschirmung (10) zugewandt ist und ihm gegenüberliegt, wobei die erste und die zweite Lippe (20, 21) mit vorbestimmtem Eingriff jeweils mit dem Flanschabschnitt (82, 82') und dem Hülsenabschnitt (81) der zweiten (80) oder der dritten (80') Abschirmung gezielt gleitend zusammenwirken.

6. Dichtungsanordnung (1) nach Anspruch 5, **dadurch gekennzeichnet, dass** der Hülsenabschnitt (81) der zweiten und der dritten Abschirmung (8', 80') auf der gegenüberliegenden Seite des Flanschabschnitts (82, 82') einen Rand (85) aufweist, der zum Flanschabschnitt (12) der ersten Abschirmung (10) geklappt und so ausgebildet ist, dass er im Gebrauch ein Zentrifugenelement von möglichen Verschmutzungen, die in der Außenumgebung vorliegen, bildet und die dritte Lippe (60) von der Außenumgebung abschirmt.

7. Dichtungsanordnung (1) nach Anspruch 5 oder 6, **dadurch gekennzeichnet, dass** der Flanschabschnitt (82) der zweiten Abschirmung (80) auf der gegenüberliegenden Seite der ersten Abschirmung (10) einen im Wesentlichen flachen metallischen Anker (90) aufweist, der einen Ring (91) aus magnetischem elastomerem Material trägt, das ein Tonrad definiert.

8. Dichtungsanordnung (1) nach Anspruch 7, **dadurch gekennzeichnet, dass** der Flanschabschnitt (82') der dritten Abschirmung (80') von einem geprägten metallischen Anker (92) definiert wird, der am Hülsenabschnitt (81) eine U-förmige Falte und an seinem Umfangsrand eine L-förmige Falte aufweist, so dass er dieselben axialen Abmessungen wie der Flanschabschnitt (82) der zweiten Abschirmung (80) aufweist, so dass sowohl die zweite als auch die dritte Abschirmung (80, 80') an dieselbe erste Abschirmung (10) gekoppelt werden können.

9. Lagereinheit (5), insbesondere für die Nabe eines Kraftfahrzeugrads, mit einer Dichtungsanordnung (1) nach einem der vorhergehenden Ansprüche.

## Revendications

1. Ensemble d'étanchéité (1) pouvant être inséré dans un compartiment (2) défini entre deux organes (3, 4) tournant l'un par rapport à l'autre, en particulier les bagues d'une unité de support de moyeu (5) pour des véhicules, afin d'isoler le compartiment de l'environnement extérieur, l'ensemble d'étanchéité comprenant une première plaque de protection annulaire (10) présentant une portion de manchon axial (11) pour l'assemblage angulaire et intégral à l'un (4) desdits organes, et une portion de bride (12) qui s'étend radialement depuis une première extrémité (13) de la portion de manchon (11) ; et un organe d'étanchéité (15) fabriqué en un matériau élastomère, présentant une portion de base annulaire (16) qui s'étend radialement et en porte-à-faux depuis un bord périphérique (18) de la portion de bride (12) et une première lèvre d'étanchéité annulaire axiale (20) ; ledit organe d'étanchéité (15) présentant également une deuxième lèvre d'étanchéité radiale (21), lesdites lèvres (20, 21) s'étendant axialement et en porte-à-faux sur le côté opposé de la première (13) extrémité de la portion de manchon (11), depuis un même côté qu'une extrémité amincie (23) de la portion de base (16), et étant agencées de manière réciproque et divergente de manière à former une forme en V en section radiale, ayant un sommet tourné vers la portion de base ;
lesdites lèvres (20, 21) présentant des bords d'étanchéité respectifs en forme de V (30, 31) et la première lèvre (20) présentant en outre un siège radial (32) tourné vers le côté opposé de la deuxième lèvre (21) et recevant un ressort toroïdal (33) appliquant sur la première lèvre (20) une contrainte radiale décalée sur une charnière élastique définie par l'extrémité amincie (23) de la portion de base (16) et ayant un centre de rotation (R) situé sur une ligne (T) coupant le bord d'étanchéité (30) de la première lèvre (20) et formant avec un plan radial un angle γ de l'ordre de 20° à 60° ; **caractérisé en ce que**, en combinaison : (i) ladite forme en V définie en section radiale par lesdites première (20) et deuxième (21) lèvres d'étanchéité a un axe parallèle à la portion de manchon (11) ; et (ii) à la fois la première et la deuxième lèvre d'étanchéité (20, 21) sont conçues pour s'accoupler, par coulissement, au moyen desdits bords en forme de V, par rapport à des surfaces d'étanchéité (40, 41) d'une deuxième (80) ou troisième (80') plaque de protection annulaire pouvant être agencée de manière sélective coaxialement à la première plaque de protection (10) et ayant des dimensions similaires ; (iii) le centre d'application de ladite contrainte radiale décalée sur la première lèvre (20) est décalé également par rapport audit bord d'étanchéité en forme de V (30) de la première lèvre (20).

2. Ensemble d'étanchéité (1) selon la revendication 1, **caractérisé en ce que** ledit centre d'application de ladite contrainte radiale décalée sur la première lèvre (20) est situé, par rapport audit bord d'étanchéité en forme de V (30) de la première lèvre (20), de manière décalée radialement plus près de la portion de manchon (11) de la première plaque de protection (10).

3. Ensemble d'étanchéité (1) selon la revendication 1 ou 2, **caractérisé en ce que** lesdites première et deuxième lèvres annulaires (20, 21) sont définies, vers ladite extrémité amincie (23) de la portion de base annulaire (16) et sur le côté opposé, par des gorges annulaires respectives (50, 51) ayant un profil semi-circulaire dans la direction radiale, le centre de rotation de ladite charnière élastique défini par ladite extrémité amincie (23) de la portion de base annulaire (16) étant situé à l'intersection de lignes opposées tangentes au profil desdites gorges (50, 51).

4. Ensemble d'étanchéité (1) selon l'une des revendications précédentes, **caractérisé en ce que** ledit organe d'étanchéité (15) présente une troisième lèvre (60), formée comme une lèvre antipoussière, qui s'étend dans la direction opposée à ladite première lèvre (20) et du même côté que ladite deuxième lèvre (21), en porte-à-faux depuis ladite portion de base (16) ; cette dernière s'étendant obliquement par rapport à ladite portion de bride (12), dans la même direction que la deuxième lèvre (21) de sorte que ladite portion de base (16) et lesdites première, deuxième et troisième lèvres (20, 21, 60), forment essentiellement, dans la direction radiale, une forme en X avec ledit centre de rotation pour la première lèvre (20) situé essentiellement au milieu de la forme en X.

5. Ensemble d'étanchéité (1) selon la revendication 4, **caractérisé en ce que** lesdites deuxième (80) et troisième (80') plaques de protection annulaires présentent chacune, dans la direction radiale, une forme essentiellement en L, comprenant une portion de manchon (81) pour l'assemblage angulaire intégral avec l'autre (3) desdits organes et une portion de bride (82, 82') agencée pendant l'utilisation en face et à l'opposé desdites portions de manchon (11) et de bride (12) de ladite première plaque de protection (10) ; lesdites première et deuxième lèvres (20, 21) coopérant par coulissement avec une interférence prédéterminée respectivement avec la portion de bride (82, 82') et la portion de manchon (81) de la deuxième (80) ou de la troisième (80') plaque de protection, respectivement.

6. Ensemble d'étanchéité (1) selon la revendication 5, **caractérisé en ce que** ladite portion de manchon (81) des deuxième et troisième plaques de protection (80, 80') présente, sur le côté opposé de la portion de bride (82, 82'), un bord (85) plié vers la portion de bride (12) de la première plaque de protection (10), formé de manière à former, pendant l'utilisation, un élément centrifuge pour des contaminants éventuels présents dans l'environnement extérieur et de manière à protéger ladite troisième lèvre (60) vers ledit environnement extérieur.

7. Ensemble d'étanchéité (1) selon la revendication 5 ou 6, **caractérisé en ce que** ladite portion de bride (82) de la deuxième plaque de protection (80) comporte, sur le côté opposé de la première plaque de protection (10), une armature métallique essentiellement plate (90) portant une bague (91) en matériau élastomère magnétique définissant une roue phonique.

8. Ensemble d'étanchéité (1) selon la revendication 7, **caractérisé en ce que** ladite portion de bride (82') de la troisième plaque de protection (80') est définie par une armature métallique frappée (92) présentant un pli en forme de U au niveau de la portion de manchon (81) et un pli en forme de L au niveau de son bord périphérique, de manière à présenter les mêmes dimensions axiales que la portion de bride (82) de la deuxième plaque de protection (80), de sorte que les deuxième et troisième plaques de protection (80, 80') puissent être, l'une et l'autre, accouplées à une même dite première plaque de protection (10).

9. Unité de support (5), en particulier pour le moyeu d'une roue d'un véhicule automobile, comprenant un ensemble d'étanchéité (1) selon l'une quelconque des revendications précédentes.
